# EUROPÄISCHE PATENTANMELDUNG

(11) **EP 0 687 746 A1**
(43) Veröffentlichungstag der Anmeldung: **20.12.1995**
(21) Anmeldenummer: 95890108.4
(22) Anmeldetag: 09.06.1995
(51) Int. Cl.: C23C 2/00, C23C 4/04

(54) **Metallischer Bauteil zur Verwendung in einem Metallbad**

(30) Priorität: 13.06.1994 AT 1178/94
(71) Anmelder: VOEST-ALPINE STAHL LINZ Gesellschaft m.b.H., A-4020 Linz (AT)
(72) Erfinder: Hagler, Josef, Dipl.-Ing., A-4020 Linz (AT)
(74) Vertreter: Kopecky, Helmut

(57) **Zusammenfassung**

Ein metallischer Bauteil (6) zur Verwendung in einem Metallbad (4), insbesondere einer Verzinkungsanlage, der zumindest mit einem Teil seiner Oberfläche (15) mit flüssigem oder nicht vollständig erstarrtem Metall, insbesondere Zink, in Berührung gelangt, ist hierfür mit einer Schutz-Mantelschicht (16) versehen.

Zur Erzielung einer wesentlichen Erhöhung der Betriebseinsatzzeiten des Bauteiles (6) ist als Schutz-Mantelschicht (16) eine auf der Basis WC-Co-Cr ausgebildete Schicht vorgesehen, wobei die Korngröße der WC-Kristallite der Schutz-Mantelschicht (16) in der näher zur Oberfläche (15) des Bauteiles (6) liegenden Deckschicht (18) der Schutz-Mantelschicht (16) kleiner ist als die der WC-Kristallite in der dem Basiswerkstoff (19) des Bauteils (6) näher liegenden Grundschicht (20) der Schutz-Mantelschicht (16) (Fig. 2, 3).

## Beschreibung

Die Erfindung betriff einen metallischen Bauteil zur Verwendung in einem Metallbad, insbesondere einer Verzinkungsanlage, wie einer Feuerverzinkungsanlage, der zumindest mit einem Teil seiner Oberfläche mit flüssigem oder nicht vollständig erstarrtem Metall, insbesondere Zink, in Berührung gelangt und hierfür mit einer Schutz-Mantelschicht versehen ist, sowie ein Verfahren zum Herstellen eines Bauteiles für die Verwendung in einem Metallbad.

Für eine Anlage zum Feuerverzinken von Stahlbändern ist es notwendig, verschiedene metallische Bauteile der Feuerverzinkungsanlage direkt im Zinkbad anzuordnen. Im speziellen handelt es sich hierbei um eine sogenannte "Bodenrolle" bzw. "Tauchrolle" zum Umlenken des zu verzinkenden Stahlbandes in einer mit dem Zinkbad gefüllten Wanne. Weiters sind in diesem Zinkbad noch Stabilisierungsrollen vorgesehen, nach deren Passieren das verzinkte Stahlband über Führungsrollen einem Galvannealing-Ofen zugeführt wird, aus dem es über eine sogenannte "Top-Rolle" bzw. "Turmrolle" abgezogen wird.

Die im Zinkbad angeordneten Metallteile unterliegen einem breiten Beanspruchungsprofil, durch das die Einsatzzeit dieser Metallteile stark herabgesetzt wird. Es kommt zur Bildung von Ablagerungen von Zink/Aluminium-Verbindungen auf diesen Metallteilen, die, sobald sie sich auf den mit dem Stahlband in Kontakt gelangenden Rollen- bzw. Rollenoberflächen bilden, zu einer nachhaltigen Verschlechterung der Qualität des verzinkten Stahlbandes führen; es bilden sich sogenannte Abdruckmarken auf dem Stahlband.

Weiters greift die Zinkschmelze die metallischen Bauteile korrosiv an, wodurch es zu weiteren, die Qualität der verzinkten Stahlbänder beeinträchtigenden Oberflächenunebenheiten kommt. Alle diese Schwierigkeiten machten es notwendig, die metallischen Bauteile, insbesondere die Bodenrolle und die Stabilisierungsrollen, innerhalb kurzer Zeiträume auszutauschen. Die erforderlichen Sanierungen bedingten unerwünschte Anlagenstillstände mit erheblichem materiellen, personellen sowie auch finanziellen Aufwand.

Weiters unterliegen auch die Lager der Rollen, die als einfache Gleitlager ausgebildet sind, in dem etwa 480°C heißen Zinkbad sowohl einem korrosiven als auch abrasiven Verschleiß. Der Lagerverschleiß teilt sich entsprechend der Werkstoffpaarung auf Lagerzapfen und Lagerbacken bzw. Lagerschale auf, wobei der Lagerzapfenverschleiß - aus Kostengründen - besonders störend ist. Eine Lagerreparatur erfordert den Ausbau der Rolle und deren Halterung, die Zerlegung, den Transport in die Instandhaltung und die Sanierung des Lagerzapfens. Dies ist ebenfalls mit erheblichem personellen und auch finanziellen Aufwand verbunden.

Weiters tritt an den außerhalb des Zinkbades angeordneten metallischen Teilen, die mit nicht vollständig erstarrtem Zink in Berührung gelangen, wie beispielsweise an den Führungsrollen, die das aus der Zinkbadschmelze austretende Stahlband dem Galvannealing-Ofen zuführen, oder der Turmrolle ein Ankleben von Zink auf.

Zwar ist es bekannt (JP-A2 - 03-094048), mittels Hochgeschwindigkeits-Flammspritzen auf die metallischen Bauteile Hartmetallschichten auf der Basis WC-Co und weiterer Elemente, wie Chrom und mindestens eine der nachstehenden Verbindungen TiC, NbC, MoC und TiB₂, aufzubringen, wodurch der Angriff der Zinkschmelze verringert wird, u.zw. dadurch, daß die Benetzbarkeit der metallischen Bauteile herabgesetzt wird. Ablagerungen an den Rollen werden zum Großteil verhindert und die Lebensdauer der Walzen bzw. Rollen wird hierdurch verlängert. Zwar ist die Erhöhung der Lebensdauer, die hierdurch erzielt wird, beachtlich, jedoch ist nach wie vor ein oftmaliger Austausch der Bauteile notwendig.

Beim Aufbringen der Schutz-Mantelschicht gemäß dem Stand der Technik mußten - um die Erhöhung der Standzeit zu erreichen - bestimmte teure Zusätze dem Spritzpulver zugegeben werden und eine Versiegelung der Spritzschichtoberfläche durch Anbringen einer keramischen Suspension, die durch eine anschließende thermische Behandlung einen keramischen Überzug auf der Spritzschicht erzeugt, vorgesehen werden.

Gemäß dem Stand der Technik entstehen beim thermischen Spritzbeschichten nach dem Beschichtungsvorgang und nach erfolgter Abkühlung innere Spannungen in der aufgebrachten Schutz-Mantelschicht, die zum Abplatzen von Teilen der Schutz-Mantelschicht führen können, insbesondere dann, wenn die Schutz-Mantelschicht einer hohen thermischen Belastung, wie bei einer Feuerverzinkungsanlage, ausgesetzt wird.

Aus der EP-A - 0 143 342, EP-A - 0 143 343 und EP-A - 0 143 344 ist es bekannt, zur Beschichtung von Ventilen in der Ölbohrindustrie, Petrochemie etc., und für Fadenführungen in der Textilindustrie sowie für Dichtringe thermische Spritzschichten, die mit Spritzpulvern auf der Basis WC-Co-Cr hergestellt werden, vorzusehen. Diese bekannten Schichtsysteme sind Einfachschichtsysteme.

Aus der WO-A2- 90/05201 ist eine Zinkbadrollenbeschichtung bekannt, die als Einfachschicht auf Kobaltbasis ausgebildet ist, u.zw. mit diversen Zusätzen an Nickel, Chrom, Wolfram, Eisen, Kohlenstoff, Bor und Silizium. Eine Spritzschicht dieser Art, die auch als selbstfließende Legierung bezeichnet wird, gewährt beim Einschmelzen eine Verminderung der Porosität und führt somit zu einer Verbesserung der Schichthaftung. Nachteilig ist hierbei, daß zum Aufbringen eine definierte Aufwärmrate und Abkühlrate sowie eine sehr hohe Einschmelztemperatur von 1000 bis 1200°C erforderlich ist. Dies erfordert aufwendige Manipulations- und Energiekosten.

Die Erfindung bezweckt die Vermeidung dieser Nachteile und Schwierigkeiten und stellt sich die Aufgabe, eine weitere wesentliche Erhöhung der Betriebseinsatzzeiten der in einem Metallbad verwendeten metallischen Bauteile, die mit flüssigem oder mit nicht vollständig erstarrtem Metall, wie Zink, in Berührung gelangen, zu erzielen. Insbesondere soll ein einwandfreier Rollenmitlauf mit der Bewegung eines Stahlbandes durch eine Feuerverzinkungslange sichergestellt sein. Weiters sollen für die Erhöhung der Lebensdauer der Bauteile spezielle Spritzwerkstoffzusätze sowie eine nachträgliche Versiegelung der Schutz-Mantelschicht nicht mehr erforderlich sein.

Diese Aufgabe wird erfindungsgemäß dadurch gelöst, daß als Schutz-Mantelschicht eine auf der Basis WC-Co-Cr ausgebildete Schicht vorgesehen ist, wobei die Korngröße der in einer Co-Cr-Matrix eingebetteten WC-Kristallite der Schutz-Mantelschicht in der näher zur Oberfläche des Bauteiles liegenden Deckschicht der Schutz-Mantelschicht kleiner ist als die der WC-Kristallite in der dem Basiswerkstoff des Bauteils näher liegenden Grundschicht der Schutz-Mantelschicht.

Die erfindungsgemäße Ausbildung der Schutz-Mantelschicht, nämlich einerseits als feinkörnige Deckschicht und andererseits als darunterliegende grobkörnigere porenreiche Grundschicht, vermeidet das Auftreten von Abplatzungen der Schutz-Mantelschicht, u.zw. auch bei hoher thermischer Belastung der Schutz-Mantelschicht. Die Schutz-Mantelschicht ist vorteilhaft auch an Innenflächen hohler Bauteile zum Schutz vor Korrosion vorgesehen.

Durch die grobkörnigere und damit porenreiche Grundschicht werden die inneren Spannungen in der Schutz-Mantelschicht zum einen vermindert und zum anderen werden Ausdehnungsunterschiede zwischen dem Basiswerkstoff des metallischen Bauteiles und der Schutz-Mantelschicht bei thermischen Belastungen im Einsatzfall (z.B. Aufwärmung und Abkühlung auf Zinkbadtemperatur) besser ausgeglichen.

Speziell an Oberflächeninhomogenitäten (z.B. Rillen in der Oberfläche der Bodenrolle) können erhöhte innere Spannungen auftreten, die gerade bei der Einfachschicht zu Abplatzungen und Rißbildung führen. Bei der erfindungsgemäßen Schutz-Mantelschicht ist keine Rißbildung sowie eine wesentlich niedrigere Abplatzneigung im Rillenbereich feststellbar.

Die erhöhte Porosität der Grundschicht wird durch die feinkörnigere und daher sehr dichte, porenarme Deckschicht versiegelt, wodurch sich eine besonders hohe Korrosionsbeständigkeit ergibt.

Die Erfindung ist mit besonderem Vorteil zur Verwendung für Zinkbadanlagen, für Zinklegierungsbadanlagen und Aluminium-Zinklegierungsbadanlagen geeignet.

Als besonders vorteilhaft hat es sich erwiesen, wenn die Schutz-Mantelschicht als Hauptbestandteile Kobalt in einem Bereich zwischen 5 und 15 %, vorzugsweise 8 und 12 %, und Chrom in einem Bereich zwischen 1 und 7 %, vorzugsweise 3 und 5 %, Rest WC und gegebenenfalls Verunreinigungen, aufweist.

Eine besonders hohe Korrosionsbeständigkeit und Verschleißbeständigkeit ergibt sich, wenn die Korngröße der WC-Kristallite in der näher zur Oberfläche des Bauteiles liegenden Deckschicht der Schutz-Mantelschicht im Bereich von etwa 1 bis 5 µm und in der dem Basiswerkstoff des Bauteils näher liegenden Grundschicht der Schutz-Mantelschicht im Bereich von etwa 1 bis 10 µm liegt, wobei sich die Durchschnittskorngrößen der WC-Kristallite der Deckschicht zu der der Grundschicht etwa 1 : 2 verhalten.

Vorteilhaft weist die Deckschicht eine Dicke im Bereich von etwa 20 bis 200 µm und die Grundschicht eine Dicke im Bereich von etwa 20 bis 250 µm auf.

Hierbei ist zweckmäßig die Schutz-Mantelschicht von zwei Schichten, nämlich der Deckschicht und der Grundschicht, gebildet und ist die Dicke der Deckschicht in Abhängigkeit des Anwendungsfalles ¹/₃ bis 3mal so groß, vorzugsweise etwa nur halb so groß wie die Dicke der Grundschicht.

Eine gute Haftung der Schutz-Mantelschicht am Bauteil wird dadurch erzielt, daß der Bauteil aus einem Basiswerkstoff auf Kobalt-Basis gebildet ist.

Als Basisverkstoffe für den Bauteil sind in Abhängigkeit der Geometrie der Bauteile auch folgende Werkstoffe zweckmäßig: rost- und säurebeständiger Stahlguß, hitzebeständiger Stahlguß, Werkzeugstahl für Warmarbeit, rost- und säurebeständige Stähle. Diese Werkstoffe sind insbesondere für die Rollenkörper (Rollenballen-Oberflächen) vorteilhaft.

Eine einfache und kostengünstige Herstellung der Bauteile ergibt sich dann, wenn der Basiswerkstoff nur unter der Schutz-Mantelschicht vorgesehen ist. Dies gilt insbesondere für teure Basiswerkstoffe auf Kobalt-Basis.

Vorteilhaft is hierbei der Basiswerkstoff in Form einer eigens an dem Bauteil aufgebrachten Schicht vorgesehen.

Diese Ausbildung ist besonders dann von Vorteil, wenn der Bauteil als Lagerzapfen ausgebildet ist. In diesem Fall ist zweckmäßig der Bauteil aus Stahl hergestellt, insbesondere aus Nickel-Chrom-Stahl, der mit dem Basiswerkstoff beschichtet ist.

Eine weitere Steigerung der Einsatzzeit der Bauteile läßt sich dadurch erzielen, wenn die Schutz-Mantelschicht mit einer Hartstoffbeschichtung versehen ist, die insbesondere aus einer TiC-Grundschicht und einer TiN-Deckschicht gebildet ist.

Ein Verfahren zum Herstellen eines Bauteiles ist dadurch gekennzeichnet, daß die Schutz-Mantelschicht durch Flammspritzen, insbesondere durch Hochgeschwindigkeits-Flammspritzen, eines Spritzpulvers auf der Basis WC-Co-Cr aufgebracht wird, wobei zweckmäßig das Aufbringen der Schutz-Mantelschicht zweistufig erfolgt, wobei zunächst eine Grundschicht aus grobkörnigem Spritzpulver und sodann eine Deckschicht aus feinkörnigerem Spritzpulver aufgebracht wird

Hierbei wird vorteilhaft die Grundschicht durch Aufspritzen des Spritzpulvers auf der Basis WC-Co-Cr, dessen Korngröße im Bereich zwischen 20 und 125 µm, vorzugsweise 45 und 100 µm, liegt, und die Deckschicht durch Aufspritzen des Spritzpulvers auf der Basis WC-Co-Cr, dessen Korngröße im Bereich zwischen 2 und 50 µm, vorzugsweise 5 und 22 µm liegt, gebildet.

Zweckmäßig wird der Bauteil als Gußstück gefertigt, u.zw. aus einem Kobalt-Basiswerkstoff.

Gemäß einer bevorzugten Variante wird der Bauteil als Stahlteil gefertigt, auf den ein Kobalt-Basiswerkstoff durch Auftragsschweißen aufgebracht wird, der anschließend mit der Schutz-Mantelschicht versehen wird. Hierbei wird vorteilhaft als Stahl ein Nickel-Chrom-Stahl verwendet.

Zur weiteren Erhöhung der Einsatzzeit der Bauteile wird nach einer bevorzugten Variante die Schutz-Mantelschicht mit einer Hartstoffbeschichtung versehen, wobei zweckmäßig die Hartstoffbeschichtung in einer Vakuumkammer aufgebracht wird.

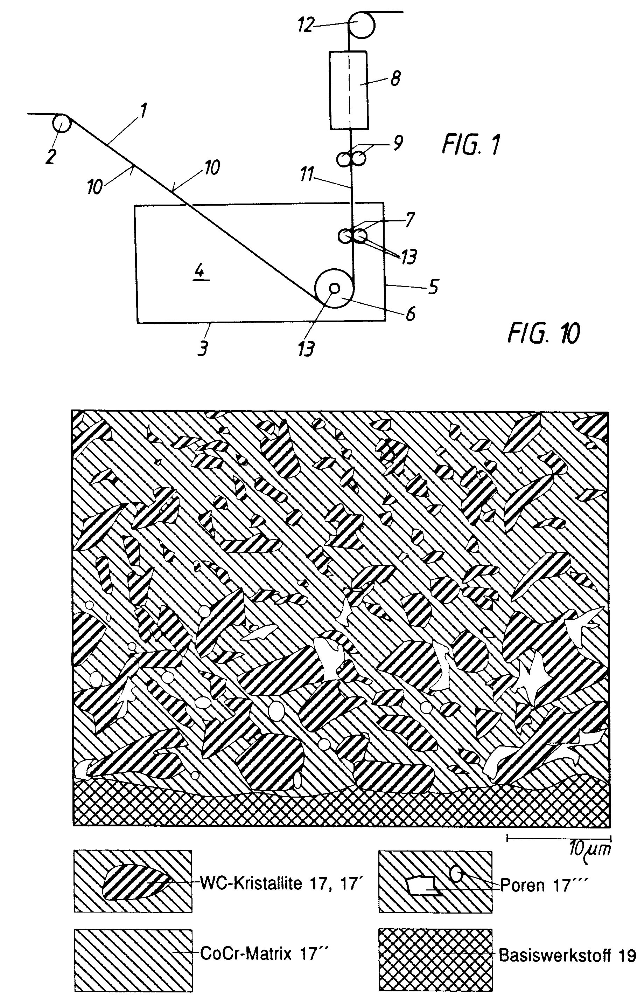

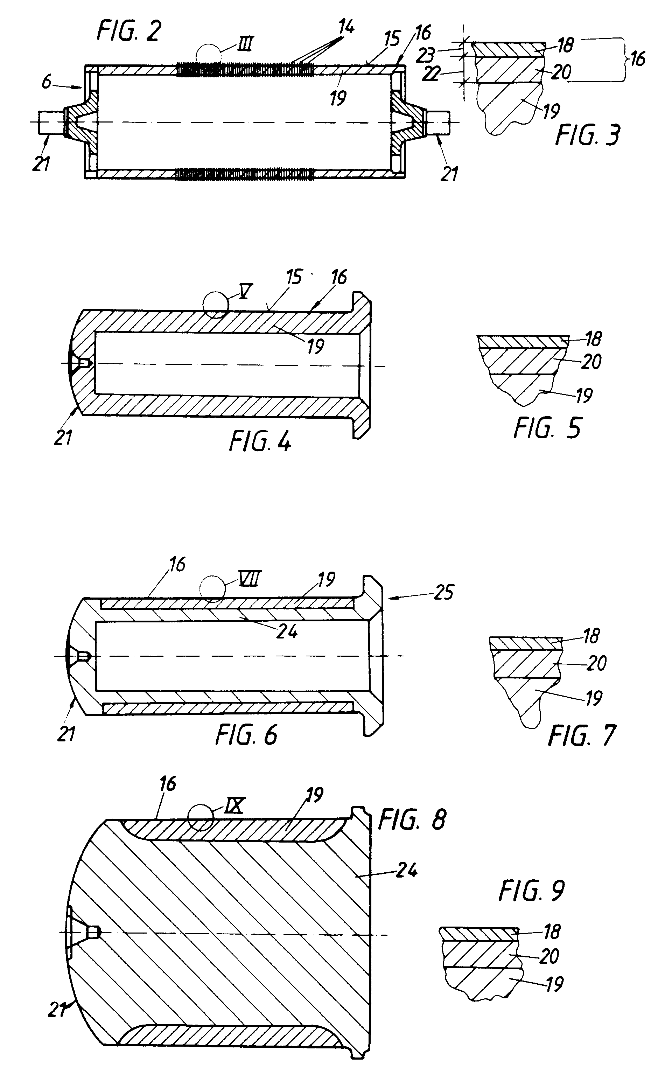

Die Erfindung ist nachfolgend anhand der Zeichnung an mehreren Ausführungsformen näher erläutert, wobei Fig. 1 eine schematische Darstellung einer Feuerverzinkungsanlage für Stahlband zeigt. In Fig. 2 ist eine Boden- bzw. Tauchrolle einer Feuerverzinkungsanlage im Schnitt veranschaulicht. Fig. 3 gibt ein Detail III der Fig. 2 in vergrößertem Maßstab wieder. In den Fig. 4, 6 und 8 sind verschiedene Ausführungsformen für einen Lagerzapfen einer Boden- bzw. Tauchrolle gezeigt, wobei die Fig. 5, 7 und 9 jeweils Details V bis IX der Beschichtung dieser Lagerzapfen in vergrößertem Maßstab zeigen. Fig. 10 gibt eine Skizze der Schutz-Mantelschicht in 2500-facher Vergrößerung wieder.

Gemäß der in Fig. 1 dargestellten Feuerverzinkungsanlage wird das zu verzinkende Stahlband 1 über eine Umlenkwalze 2 zu einer nahe des Bodens 3 einer mit einem Zinkbad 4 gefüllten Wanne 5 drehbar gelagerten Boden- bzw. Tauchrolle 6 geführt. Dort erfolgt die Umlenkung des Stahlbandes 1, das anschließend mittels noch innerhalb des Zinkbades 4 angeordneter Stabilisierungswalzen 7 vertikal hochgefördert und einem Galvannealing-Ofen 8 zugeführt wird. Vor dem Galvannealing-Ofen 8 sind Führungswalzen 9 angeordnet. Diese liegen bereits oberhalb des Zinkbades 4, gelangen jedoch mit noch nicht vollständig erstarrtem Zink 11, das an der Oberfläche 10 des Stahlbandes 1 haftet, in Kontakt. Nach Durchtritt durch den Galvannealing-Ofen 8 wird das verzinkte Stahlband 1 über eine Top-Rolle bzw. Turmrolle 12 abgezogen.

Die Lager 13 der Tauchrolle 6 und der Stabilisierungswalken 7 liegen innerhalb der Zinkbades 4 und sind an einem nicht näher dargestellten, in das Zinkbad 4 tauchenden Gerüst angeordnet. Die Tauchrolle 6 weist zumindest an ihrem Mantelmittelteil eine mit Umfangsrillen oder als Spirale ausgeführte Rillen 14 versehene Oberfläche 15 auf, welche Umfangsrillen 14 das Abfließen von flüssigem Zink ermöglichen, um die Verdrängung des flüssigen Zinks zwischen dem Stahlband 1 und der Oberfläche 15 der Tauchrolle 6 sicherzustellen. Die Umfangsrillen 14 oder spiraligen Rillen weisen eine Tiefe zwischen 0,5 und 5 mm auf, der Rillenabstand beträgt 5 bis 100 mm. Übergangsradien zwischen 0,5 bis 5 mm sind zur Vermeidung von Kantenkerben vorgesehen. Der Öffnungswinkel solchen Rillen liegt zweckmäßig zwischen 60 und 140°.

Erfindungsgemäß sind Bauteile 6, 7, 9, 12, die mit flüssigem Zink oder mit noch nicht stellenweise vollständig erstarrtem Zink in Kontakt gelangen, mit einer Schutz-Mantelschicht 16 versehen, die auf der Basis WC-Co-Cr beruht und vorteilhaft durch Hochgeschwindigkeits-Flammspritzen eines Spritzpulvers aufgebracht wird. Die Korngröße der in einer CoCr-Matrix 17'' eingebetteten WC-Kristallite 17 der Schutz-Mantelschicht 16 in der näher zur Oberfläche 15 des Bauteiles liegenden Deckschicht 18 der Schutz-Mantelschicht 16 ist kleiner als die Korngröße der WC-Kristallite 17' in der dem Basiswerkstoff 19 des Bauteiles näher liegenden Grundschicht 20 der Schutz-Mantelschicht 16.

Diese Schutz-Mantelschicht 16 läßt sich für sämtliche Oberflächen 15 der im Zinkbad 4 eingesetzten Rollen bzw. Walzen 6, 7 sowie als Beschichtung der Lagerzapfen 21 dieser Rollen bzw. Walzen 6, 7 verwenden. Weite mögliche Anwendungen sind für die Top-Rolle 12, für die das Zinkbad 4 aufnehmende Wanne 5, den Zuführrüssel für das Stahlband 1 sowie generell für alle Anlagenbauteile, die mit flüssigem Zink, oder solche, die mit noch nicht vollständig erstarrtem Zink in Berührung gelangen, vorgesehen, soferne diese Anlagenbauteile aus Metall gefertigt sind. Hierbei dient die Schutz-Mantelschicht, die an Bauteilen, die außerhalb des Zinkbades 4 angeordnet sind, vorgesehen ist, primär zur Vermeidung des Anklebens bzw. Anhaftens von noch nicht vollständig erstarrtem Zink. Anhaftendes Zink läßt sich, im Gegensatz zu nicht beschichteten Bauteilen, von der Beschichtung durch einfaches Abbürsten entfernen.

Die Schutz-Mantelschicht 16 besteht prinzpiell aus einer Grundschicht (oder auch Haftschicht) 20, deren chemische Zusammensetzung ähnlich der chemischen Zusammensetzung des Spritzpulvers ist, dessen chemische Zusammensetzung wie folgt lautet:
5 % ≦ Co ≦ 15 %, 1 % ≦ Cr = 7 %, Rest WC sowie Verunreinigungen an Fe, N, O, vorzugsweise
8 % ≦ Co = 12 %, 3 % ≦ Cr = 5 %, Rest WC sowie Verunreinigungen an Fe, N, O,
Die Korngröße der WC-Kristallite 17' der Grundschicht 20 liegt zwischen 1 und 10 µm. Die Spritzkorngröße des Spritzpulvers, das durch Flammspritzen auf den metallischen Bauteil aufgebracht wird, beträgt 20 bis 125 µm. Die Schichtdicke 22 der Grundschicht 20 liegt zweckmäßig zwischen 20 und 250 µm.

Auf diese Grundschicht 20 wird noch die Deckschicht 18 aufgebracht, deren chemische Zusammensetzung etwa gleich der der Grundschicht 20 ist. Die Korngröße der WC-Kristallite 17 der Deckschicht 18 liegt jedoch zwischen 1 bis 5 µm, was durch eine gezielte Herstellung der WC-Kristallite im Spritzpulver erzielt wird. Die Spritzkorngröße liegt zwischen 2 und 50 µm. Die Schichtdicke 23 der Deckschicht 18 liegt zweckmäßig zwischen 20 und 200 µm.

Die Grundschicht 20 ist grobkörniger und damit reicher an Poren 17''' als die Deckschicht 18, wodurch innere Spannungen minimiert werden und Ausdehnungsunterschiede zwischen dem Basiswerkstoff 19 des metallischen Bauteiles und der Grundschicht 20 im Einsatzfall (z.B. bei der Aufwärmung und Abkühlung auf Zinkbadtemperatur) besser ausgeglichen werden. Die spezielle an Oberflächen-Inhomogenitäten (z.B. den Rillen 14 an der Boden- bzw. Tauchrolle 6) auftretenden erhöhten inneren Spannungen geben bei einer herkömmlichen Einfachschicht zum Abplatzen und zur Rißbildung Anlaß. Bei der erfindungsgemäßen Schutz-Mantelschicht 16 ist jedoch keine Rißbildung sowie eine wesentlich geringere Abplatzneigung feststellbar, insbesondere auch im Bereich der Rillen 14.

Die feinkörnige und sehr dichte Deckschicht 18 versiegelt die Grundschicht 20, so daß eine hohe Korrosionsbeständigkeit sichergestellt ist und die erhöhte Porosität der Grundschicht 20 keine Rolle spielt. Der durch die Schutz-Mantelschicht 16 verminderte Verschleiß bewirkt einen wesentlich verringerten Eintrag von Rollenmaterial und Lagermaterial in das Zinkbad.

Die in den Fig. 2 und 3 dargestellte Tauchrolle mit einer Tiefe der Umfangsrillen 14 von 1 mm (Öffnungswinkel 120°, Rillenabstand 60 mm) wies eine Schichtdicke 22 der Grundschicht 20 von 80 µm und eine Schichtdicke 23 der Deckschicht 18 von 40 µm auf. Mit dieser Schutz-Mantelschicht 16 konnte eine Betriebseinsatzzeit von mindestens fünf Wochen erzielt werden.

Der in den Fig. 4 und 5 dargestellte Lagerzapfen 21 der Tauch- bzw. Bodenrolle bzw. Stabilisierungsrolle 6 ist aus einem Gußwerkstoff auf Co-Basis (als Basiswerkstoff 19) hergestellt. Die hierfür am besten geeigneten Werkstoffe sind in nachstehender Tabelle 1 aufgelistet:

**Tabelle 1**

| Legierung | Richtanalyse % | | | | | | | |
|---|---|---|---|---|---|---|---|---|
| | Co | Cr | W | C | Ni | Mo | Fe | Si |
| Stellite 3 | Rest | 30 | 13 | 2,4 | - | - | - | - |
| Stellite 4 | Rest | 33 | 14 | 1 | - | - | - | 1 |
| Stellite 6 | Rest | 28 | 5 | 1 | - | - | - | - |
| Stellite 7 | Rest | 26 | 6 | 0,4 | - | - | - | - |
| Stellite 12 | Rest | 29 | 8 | 1,8 | - | - | - | - |
| Stellite 20 | Rest | 33 | 18 | 2,5 | - | - | - | - |
| Stellite 21 | Rest | 27 | - | 0,2 | 2 | 6 | - | - |
| Stellite 1040 | Rest | 33 | 18 | 2 | - | - | - | - |
| Tribaloy T 400 | Rest | 8,5 | - | 0,1 | - | 28 | 3 | 2,6 |
| Tribaloy T 800 | Rest | 17,5 | - | 0,1 | - | 28 | 3 | 3 |

Die erfindungsgemäße Schutz-Mantelschicht 16 ist direkt auf dem Gußwerkstoff aufgetragen.

Der in den Fig. 6 und 7 veranschaulichte Lagerzapfen ist als Hülse 25 ausgebildet und besteht als Grundwerkstoff 24 aus einem Ni-Cr-Stahl. Auf die Hülse 25 ist ein Auftragsschweißwerkstoff auf Co-Basis als Basiswerkstoff 19 in einer Dicke von etwa 10 mm aufgebracht, der vorteilhaft eine der in nachstehender Tabelle 2 angegebenen chemischen Zusammensetzungen aufweist.

**Tabelle 2**

| Legierung | Richtanalyse % | | | | | | | | | |
|---|---|---|---|---|---|---|---|---|---|---|
| | Co | Cr | W | C | Ni | Mo | Fe | Si | Mn | Sonstige |
| Stellite 1 | Rest | 30 | 12 | 2,5 | - | - | - | - | - | - |
| Stellite 4 | Rest | 33 | 14 | 1 | - | - | - | - | - | - |
| Stellite 4H | Rest | 33 | 11 | 1,7 | 2 max. | - | 2 | - | 1 max. | - |
| Stellite 6 | Rest | 28 | 4 | 1,1 | - | - | - | - | - | - |
| Stellite 7 | Rest | 26 | 6 | 0,4 | - | - | - | - | - | - |
| Stellite 12 | Rest | 29 | 8 | 1,8 | - | - | - | - | - | - |
| Stellite 12P | Rest | 31 | 8 | 1,4 | - | - | - | - | - | - |
| Stellite 20 | Rest | 33 | 18 | 2,5 | - | - | - | - | - | - |
| Stellite 21 | Rest | 27 | - | 0,25 | 2 | 6 | - | - | - | - |
| Stellite 25 | Rest | 20 | 15 | 0,1 | 10 | - | <3 | - | - | - |
| Stellite 31 | Rest | 26 | 7 | 0,5 | 10 | - | - | - | - | - |
| Stellite 190 | Rest | 26 | 14,5 | 3,25 | 3 | 1 | 3 | 0,85 | 0,5 | - |
| Stellite 238 | Rest | 26 | - | 0,07 | - | 3 | 20 | 0,75 | 0,75 | - |
| Stellite 250 | Rest | 28 | - | 0,1 | - | - | 20 | - | - | - |
| Stellite F | Rest | 25 | 12 | 1,7 | 22 | - | - | - | - | - |
| Tribaloy T 400 | Rest | 8,5 | - | 0,08 max. | - | 28,5 | - | 2,6 | - | Ni+Fe 3 max. |
| Tribaloy T 800 | Rest | 17,5 | - | 0,08 max. | - | 28,5 | - | 3,4 | - | Ni+Fe 3 max. |

Die erfindungsgemäße Schutz-Mantelschicht 16 wird direkt auf den durch Auftragsschweißung aufgebrachten Basiswerkstoff 19 aufgebracht. Eine weitere Ausführungsform eines Lagerzapfens ist in den Fig. 8 und 9 veranschaulicht. Der Lagerzapfen 21 ist aus einem Grundwerkstoff 24, ebenfalls auf Ni-Cr-Basis, gefertigt und mit einer etwa 10 mm starken Stellite 6-Auftragsschweißung als Basiswerkstoff 19 an seiner zylindrischen Zapfenoberfläche versehen. Auf diese ist die erfindungsgemäße Schutz-Mantelschicht 16 durch HG-Flammspritzen aufgebracht.

Die in den Fig. 4 bis 9 veranschaulichten Lagerzapfen 21 sind für eine wesentliche Erhöhung der Betriebseinsatzzeit einer Tauch- bzw. Bodenrolle und Stabilisierungsrolle 6 verantwortlich. Die Schutz-Mantelschicht 16 schützt den Basiswerkstoff 19 der Lagerzapfen 21 etwa neun bis dreizehn Wochen. Nach dieser Einsatzzeit ist es lediglich notwendig, den Lagerzapfen 21 zu überdrehen und neu mit einer Schutz-Mantelschicht 16 zu versehen. Der Basiswerkstoff 19 muß hingegen nicht ersetzt werden.

Die Aufbringung des Basiswerkstoffes 19 auf Co-Basis auf einen Grundwerkstoff 24 des Bauteiles erfolgt vorteilhaft mit einem der in DIN 8555 angegebenen Auftragsschweißverfahren. Anstelle dieser Verfahren kann die Auftragsschweißung auch mit einem Laser entsprechender Leistung aufgebracht werden. Hierzu wird über eine Drahtzuführung Draht oder über einen Pulverförderer Spritzpulver entsprechender Körnung in die Schmelzzone am Bauteil zugeführt. Durch die Laserstrahlung schmilzt eine kleine Zone am Bauteil auf. Der zugeführte Draht oder das zugeführte Spritzpulver schmilzt vollständig auf und bildet eine flächendeckende Beschichtung. Als Zusatzwerkstoffe für den Anwendungsfall der Beschichtung eines Lagerzapfens 21 kommen wieder die Co-Basis-Legierungen wie beim konventionellen Auftragsschweißen in Drahtform oder Pulverform in Frage.

Die oben beschriebene Verfahrensvariante bietet den großen Vorteil, daß zu den Co-Basis-Pulvern zusätzlich Hartmetallpulver auf der Basis von WC, WC-Co, TiC, MoC, NbC, TiB etc. dazugemischt werden können. Dadurch wird eine wesentlich höhere Härte, Korrosionsbeständigkeit und Verschleißbeständigkeit erreicht.

Auf diese Laserbeschichtung wird dann die erfindungsgemäße Schutz-Mantelschicht 16 aufgebracht, u.zw. durch Hochgeschwindigkeits-Flammspritzen. Hierdurch ist gewährleistet, daß die Laserbeschichtung durch die relativ billige Schutz-Mantelschicht 16 sehr lange vor Verschleiß geschützt ist. Die qualitativ ebenfalls sehr hochwertige Laserbeschichtung garantiert nach dem Verschleißen der Schutz-Mantelschicht 16 einen möglichst langen und sicheren Betriebseinsatz des Lagerzapfens 21.

Es ist möglich, die erfindungsgemäße Schutz-Mantelschicht 16 mit einer zusätzlichen Hartstoffbeschichtung oder keramischen Beschichtung, die in einer Vakuumkammer aufgebracht wird, zu versehen. Durch eine solche zusätzliche Hartstoffbeschichtung wird der Verschleiß eines Lagerzapfens 21 nochmals wesentlich verringert. Hierdurch kann auch der Reibungswiderstand und der Verschleiß der Lagerplatten bzw. Lagerschalen herabgesetzt werden. Zum Aufbringen einer solchen Hartstoffbeschichtung eignen sich PVD (Physical-Vapour-Deposition)-Beschichtungstechniken, Sputtertechniken, Ionenplatieren und CVD (Chemical-Vapour-Deposition)-Beschichtungstechnicken. Weiters ist hierfür auch das Laser-PVD-Verfahren geeignet, bei dem mit Hilfe eines Lasers ein Targetmaterial verdampft wird und damit der Lagerzapfen reaktiv unter Zugabe von z.B. N, O beschichtet werden kann.

Weitere mögliche Hartstoff-Schichtsysteme:
Einfachschichten, Mehrlagenschichten und Gradientenschicht aus: TiN, TiC, TiB, TiAIN, TiCN, TiBN.

Die Erfindung ist für metallische Bauteile zur Verwendung in Zink-, Zinklegierungs- und Aluminium-Zinklegierungsbädern besonders geeignet sowie weiters für metallische Bauteile, die außerhalb der genannten Bäder angeordnet sind und mit noch nicht vollständig erstarrten Zink-, Zinklegierungs- und Aluminium-Zinklegierungsbeschichtungen auf dem Stahlband in Kontakt kommen, wie z.B. die Turmrolle, Führungsrollen, Gleitbleche etc.

Beispiele für Badzusammensetzungen:
Zinkbäder:
- Zink mit: 0,1 - 0,2 Gew.% Aluminium,
Verunreinigungen: Blei, Eisen
- Zink mit: 0,18 - 0,22 Gew.% Aluminium; 0,05 Gew.% Blei
Verunreinigungen: Eisen

Zinklegierungsbad:
- Zink mit: 4,2 - 5,0 Gew.% Aluminium, Zugaben von Cer, Lanthan
Verunreinigungen: Blei, Eisen

Aluminium-Zinklegierungsbad:
- Zink mit: 55 Gew.% Aluminium; 1,6 Gew.% Silizium.
Verunreinigungen: Eisen, Blei

## Patentansprüche

1. Metallischer Bauteil (6, 7, 9, 12, 21) zur Verwendung in einem Metallbad (4), insbesondere einer Verzinkungsanlage, wie einer Feuerverzinkungsanlage, der zumindest mit einem Teil seiner Oberfläche (15) mit flüssigem oder nicht vollständig erstarrtem Metall, insbesondere Zink, in Berührung gelangt und hierfür mit einer Schutz-Mantelschicht (16) versehen ist, dadurch gekennzeichnet, daß als Schutz-Mantelschicht (16) eine auf der Basis WC-Co-Cr ausgebildete Schicht vorgesehen ist, wobei die Korngröße der in einer Co-Cr-Matrix eingebetteten WC-Kristallite (17) der Schutz-Mantelschicht (16) in der näher zur Oberfläche (15) des Bauteiles (6, 7, 9, 12, 21) liegenden Deckschicht (18) der Schutz-Mantelschicht (16) kleiner ist als die der WC-Kristallite (17') in der dem Basiswerkstoff (19) des Bauteils (6, 7, 9, 12, 21) näher liegenden Grundschicht (20) der Schutz-Mantelschicht (16).

2. Bauteil nach Anspruch 1, dadurch gekennzeichnet, daß die Schutz-Mantelschicht (16) als Hauptbestandteile Kobalt in einem Bereich zwischen 5 und 15 %, vorzugsweise 8 und 12 %, und Chrom in einem Bereich zwischen 1 und 7 %, vorzugsweise 3 und 5 %, Rest WC und gegebenenfalls Verunreinigungen, aufweist.

3. Bauteil nach Anspruch 1 oder 2, dadurch gekennzeichnet, daß die Korngröße der WC-Kristallite (17) in der näher zur Oberfläche (15) des Bauteiles liegenden Deckschicht (18) der Schutz-Mantelschicht (16) im Bereich von etwa 1 bis 5 µm und in der dem Basiswerkstoff (19) des Bauteils näher liegenden Grundschicht (20) der Schutz-Mantelschicht (16) im Bereich von etwa 1 bis 10 µm liegt, wobei sich die Durchschnittskorngrößen der WC-Kristallite (17) der Deckschicht (18) zu der der Grundschicht (20) etwa wie 1 : 2 verhalten.

4. Bauteil nach einem oder mehreren der Ansprüche 1 bis 3, dadurch gekennzeichnet, daß die Deckschicht (18) eine Dicke (23) im Bereich von etwa 20 bis 200 µm und die Grundschicht (20) eine Dicke (22) im Bereich von etwa 20 bis 250 µm aufweist.

5. Bauteil nach Anspruch 4, dadurch gekennzeichnet, daß die Schutz-Mantelschicht (16) von zwei Schichten, nämlich der Deckschicht (18) und der Grundschicht (20), gebildet ist und die Dicke (23) der Deckschicht (18) in Abhängigkeit des Anwendungsfalles ¹/₃ bis 3mal so groß ist, vorzugsweise etwa nur halb so groß ist, wie die Dicke (22) der Grundschicht (20).

6. Bauteil nach einem oder mehrere der Ansprüche 1 bis 5, dadurch gekennzeichnet, daß der Bauteil aus einem Basiswerkstoff (19) auf Kobalt-Basis gebildet ist.

7. Bauteil nach einem oder mehreren der Ansprüche 1 bis 5, dadurch gekennzeichnet, daß der Bauteil aus einem Basiswerkstoff (19) folgender Werkstoffe gebildet ist: rost- und säurebeständiger Stahlguß, hitzebeständiger Stahlguß, Werkzeugstahl für Warmarbeit, rost- und säurebeständige Stähle.

8. Bauteil nach Anspruch 6 oder 7, dadurch gekennzeichnet, daß der Basiswerkstoff (19) nur unter der Schutz-Mantelschicht (16) vorgesehen ist.

9. Bauteil nach Anspruch 8, dadurch gekennzeichnet, daß der Basiswerkstoff (19) in Form einer eigens an dem Bauteil aufgebrachten Schicht vorgesehen ist (Fig. 6 bis 9).

10. Bauteil nach Anspruch 9, dadurch gekennzeichnet, daß der Bauteil als Lagerzapfen (21) einer Rolle (6, 7) ausgebildet ist.

11. Bauteil nach einem oder mehreren der Ansprüche 8 bis 10, dadurch gekennzeichnet, daß der Bauteil (21) aus Stahl hergestellt ist, insbesondere aus Nickel-Chrom-Stahl, der mit dem Basiswerkstoff (19) beschichtet ist.

12. Bauteil nach einem oder mehreren der Ansprüche 1 bis 11, dadurch gekennzeichnet, daß die Schutz-Mantelschicht (16) mit einer Hartstoffbeschichtung versehen ist, die insbesondere aus einer TiC-Grundschicht und einer TiN-Deckschicht gebildet ist.

13. Verfahren zum Herstellen eines Bauteiles nach einem oder mehreren der Ansprüche 1 bis 12, dadurch gekennzeichnet, daß die Schutz-Mantelschicht (16) durch Flammspritzen, insbesondere durch Hochgeschwindigkeits-Flammspritzen, eines Spritzpulvers auf der Basis WC-Co-Cr aufgebracht wird.

14. Verfahren nach Anspruch 13, dadurch gekennzeichnet, daß das Aufbringen der Schutz-Mantelschicht (16) zweistufig erfolgt, wobei zunächst eine Grundschicht (20) aus grobkörnigem Spritzpulver und sodann eine Deckschicht (18) aus feinkörnigerem Spritzpulver aufgebracht wird.

15. Verfahren nach Anspruch 14, dadurch gekennzeichnet, daß die Grundschicht (20) durch Aufspritzen des Spritzpulvers auf der Basis WC-Co-Cr, dessen Korngröße im Bereich zwischen 20 und 125 µm, vorzugsweise 45 und 100 µm, liegt, und die Deckschicht (18) durch Aufspritzen des Spritzpulvers auf der Basis WC-Co-Cr, dessen Korngröße im Bereich zwischen 2 und 50 µm, vorzugsweise 5 und 22 µm, liegt, gebildet wird.

16. Verfahren nach einem oder mehreren der Ansprüche 13 bis 15, dadurch gekennzeichnet, daß der Bauteil (21) als Gußstück gefertigt wird, u.zw. aus einem Kobalt-Basiswerkstoff.

17. Verfahren nach einem oder mehreren der Ansprüche 13 bis 15, dadurch gekennzeichnet, daß der Bauteil (21) als Stahlteil gefertigt wird, auf den ein Kobalt-Basiswerkstoff (19) durch Auftragsschweißen aufgebracht wird, der anschließend mit der Schutz-Mantelschicht (16) versehen wird.

18. Verfahren nach Anspruch 17, dadurch gekennzeichnet, daß als Stahl ein Nickel-Chrom-Stahl verwendet wird.

19. Verfahren nach einem oder mehreren der Ansprüche 13 bis 18, dadurch gekennzeichnet, daß die Schutz-Mantelschicht (16) mit einer Hartstoffbeschichtung versehen wird.

20. Verfahren nach Anspruch 19, dadurch gekennzeichnet, daß die Hartstoffbeschichtung in einer Vakuumkammer aufgebracht wird.

21. Verwendung eines Bauteiles nach einem oder mehreren der Ansprüche 1 bis 12, dadurch gekennzeichnet, daß der Bauteil in Zinkbadanlagen, Zinklegierungsbadanlagen und/oder in Aluminium-Zinklegierungsbadanlagen eingesetzt wird.
